Europäisches Patentamt

European Patent Office

Office européen des brevets

(11) Publication number: **0 138 571**
**B1**

(12) **EUROPEAN PATENT SPECIFICATION**

(45) Date of publication of patent specification: 07.03.90

(51) Int. Cl.⁵: **B 62 B 1/14**

(21) Application number: 84306908.9

(22) Date of filing: 10.10.84

(54) A wheeled mechanism.

(30) Priority: 13.10.83 GB 8327363

(43) Date of publication of application:
24.04.85 Bulletin 85/17

(45) Publication of the grant of the patent:
07.03.90 Bulletin 90/10

(84) Designated Contracting States:
AT BE CH DE FR GB IT LI LU NL SE

(56) References cited:
DE-C- 815 448
FR-A-1 339 773
FR-A-2 057 544
FR-A-2 120 459
GB-A- 566 932
GB-A- 677 567
US-A-3 247 989

(73) Proprietor: Crawford, Henry Berrif
Blue Hills Blowinghouse Hill
Ludgvan Penzance Cornwall (GB)

(72) Inventor: Crawford, Henry Berrif
Blue Hills Blowinghouse Hill
Ludgvan Penzance Cornwall (GB)

(74) Representative: Bryer, Kenneth Robert
Hepworth Lawrence & Bryer 1 Strangways
Villas
Truro Cornwall TR1 2PA (GB)

Courier Press, Leamington Spa, England.

## Description

The present invention relates to a wheeled mechanism which may be formed as a load-bearing trolley for general purpose use or for one of a range of special purposes, or may be adapted as a support frame for assistance with walking.

Various different trolleys for transporting loads are known. One such known trolley, the so-called sackbarrow, comprises a rigid L-shape frame with a pair of wheels pivoted at the intersection of two approximately orthogonal arms of the frame. The horizontal arm is very much shorter than the vertical arm and this latter has a pair of handles at the upper end, or a loop by which the barrow can be manipulated. Such barrows have the disadvantage that loading and unloading involves tipping the load in order to introduce the platform constituted by the horizontal arm of the L-shape frame. Further, the weight of the load is to a large extent carried by the operator through the handle, particularly if the frame is inclined at a substantial angle to the vertical in operation, and there is a risk that the load will tip and fall off if the load bearing platform is placed on the ground, for example, to allow the operator to rest. A development of the sack-barrow is known from British Patent 566,932, which discloses a trolley having a pivoted sub-frame with arms for engagement under a raised floor of a special load.

A special load is also envisaged for another trolley described in French Patent 1,339,773. In this latter Patent a frame for a gas bottle can be engaged by a hook on a main frame to lift this into a tilted position for transport as is common with sack-barrows.

The present invention seeks to provide a wheeled mechanism which can be used as a load bearing trolley or barrow and which will not suffer from the disadvantages of the known sack-barrow and at the same time will be simpler and more economical to manufacture than known four-wheeled trolleys; it has the unique features that it is designed to carry the load upright rather than in a tilted orientation like a sack-barrow, and can rest in a stable state on the ground and receive the weight of the user without risk of rolling.

According to the present invention there is provided a wheeled mechanism for transporting a load, of the type comprising a main frame the members of which define a main frame plane, at least two ground wheels mounted on the main frame so as to be turnable about a common first pivot axis, and an operating handle joined to the main frame at an upper end thereof and extending at an angle to the main frame plane on a first side thereof, a secondary rigid frame permanently pivotally attached at or adjacent one end thereof to the main frame to turn about a second pivot axis substantially parallel to the said first pivot axis, a load platform at the end of the secondary frame remote from the said second pivot axis, and first and second limit stops acting to limit the relative pivoting movement of the main and secondary frames in first and second directions respectively to determine respective first and second relative orientations of the main and secondary frames, characterised in that the relative lengths of the secondary frame from the second pivot axis to the load platform and of the main frame from the second pivot axis to the ground-contacting points of the ground wheels are such that in the said first relative orientation of the main and secondary frames, the load platform is engageable on the ground substantially parallel thereto with the wheels of the main frame substantially out of load-bearing contact with the ground so that any downward force applied to the operating handle with a line of action passing on the side of the second axis opposite the first axis maintains the mechanism in the said first relative orientation of the main and secondary frames, and in that the platform can be raised from the ground to a substantially horizontal raised position by relative turning movement of the main frame with respect to the secondary frame about the said second pivot axis to move the mechanism to the said second relative orientation of the said main and secondary frames with the platform experiencing no substantial tipping from the substantially horizontal position in moving from the lowered to the raised positions.

Because the operating handle is inclined to the main support frame the leverage which can be applied by the handle is sufficiently great to be able to control even substantial loads on the platform with this lying horizontally without requiring the application of a very great force at the handle.

It is a further feature of the present invention that relative movement between the main support frame and the secondary frame is limited by abutment stop means to determine the said first relative position orientation of the main and secondary frames. In this first relative position the ground-engaging end of the secondary frame can be placed in contact with the ground, in which case any attempt to move the handle in the direction of displacement from the second relative orientation towards the first relative orientation is prevented by such abutment stop means, forces exerted on the handle being transferred to the ground through the secondary frame. When the operator wishes, therefore, it is possible simply to lower the platform onto the ground and to allow the weight of the user's body to rest on the operating handle without risk that the mechanism will roll on the wheels. For the elderly or infirm, who may require frequent rest periods, this is a considerable advantage since the mechanism can be used as a support to lean on at intervals during a passage from one place to another transporting a load.

This aspect of the invention also enables it to be used as a replacement for a conventional walking support frame for the infirm. People having injured legs or spines, can particularly benefit from this arrangement. In such an embodiment the secondary frame instead of being provided with a load bearing platform, is formed as a foot having frictional properties in order to increase the frictional resistance between the foot and the ground. Such properties may be provided, for example, by suitably covering the ground-engaging surface of the foot with rubber or plastics material having an appropriate coefficient of friction.

Likewise, in such an embodiment, the operating handle may be provided as a U-shape partially encircling the body of the user. Then, by rocking the support handle towards the user the ground-engaging foot can be released from the ground allowing the wheels to roll so that the invalid can walk partly supported by the rolling wheels; in such circumstances it is envisaged that the ground-engaging foot will still be slightly in contact with the ground so that a degree of frictional resistance which can be controlled by the operator acting on the handle, can be maintained for control purposes. When required it is only necessary then to push the handle slightly away from the body of the operator in order to re-engage the ground-engaging foot on the ground so that the whole weight of the operator can be allowed to rest on the support frame which, conveniently, is located just below elbow height. Alternatively, an additional ground-engaging foot may be provided on the other side of the axis of the wheels of the main frame. The wheels may then only roll when a balance position between two terminal positions is achieved and tilting of the operating handle to either side of this balance position, beyond a certain angle, will result in one or other of the two ground-engaging feet coming into contact with the ground and preventing further rolling movement of the wheels whilst at the same time providing support on which an operator may lean.

Embodiments of the present invention may also be provided with means for receiving an enlarged frame or platform removably attachable to the load platform. Such enlarged frame or platform may be suitable, for example, for retaining a dustbin or like dimensioned article, and has the advantage that, with the platform flat on the ground it can be moved under the dustbin by sliding, and subsequently raised without tilting the dustbin. Of course, like a sack-barrow, the platform can be tilted to move the centre of gravity of the article supported thereby more closely towards the axis of the ground wheels if this should be desired. However, because the operating handle is spaced from the vertical plane including the axis of the ground wheels when the mechanism is in the transportation position, adequate leverage for manipulating such weight is readily available without requiring the operator to exert a large force.

For convenience, the load-bearing platform may be removable or may be pivotally connected to the secondary frame to allow it to be folded flat against the frame.

Likewise, for convenience in storage, the operating handle may be formed such that it can be folded flat or telescoped within a part of the frame.

It is envisaged that embodiments of the present invention may also be made with a seat fixed to or attachable to the secondary frame for use as a baby carriage for supporting and transporting infants. Such an arrangement has the advantage of being self-braking in the sense that when the operating handle is released, the mechanism as a whole will turn about the ground-engaging wheels until the leg frame comes into contact with the ground whereupon the frictional engagement of this with the ground will prevent any movement or further movement.

Various embodiments of the present invention will now be more particularly described, by way of example, with reference to the accompanying drawings, in which:

Figure 1 is a perspective view of an embodiment of the invention constructed as a load-bearing trolley;

Figure 2 is a side view of the embodiment of Figure 1 in a first position;

Figure 3 is a side view of the embodiment of the invention in a second position;

Figure 4 is a side view of the embodiment in a third operating position; and

Figure 5 is a perspective view of an alternative embodiment.

Referring now to the drawings, the trolley illustrated is generally indicated with the reference numeral 11 and comprises a generally U-shape main frame 12 having arms 13, 14 joined at their free ends by an axle 15 carrying two wheels 16, 17, one at each end.

From the bight portion of the U-shape frame 12 extends an upright column 18 within which telescopically slides a handle extension 19 having, at its free upper end, a transverse operating handle 20.

The telescopic handle extension 19 has a plurality of holes 21 and the column 18 has a spring loaded plunger 22 engaged selectively in one of the holes 21 to determine the effective length of the handle extension 19 by selection of its projection distance from the column 18. The height of the transverse handle 20 above the ground can thus be easily adjusted. Alternative adjustment systems are also possible, however.

Extending transversely across the U-shape frame 12 is a cross beam 23 pivoted about an axis X—X at each end to a respective arm 13, 14 and having two downwardly divergent support legs 24, 25 to the lower end of which is secured a platform generally indicated 26 in the form of a shallow tray having a flat bottom 27 and left and right sides 28, 29 and an upright back 30. The interconnection between the legs 24, 25 and the platform 26 is made by welding or bolting the lower ends of the legs 24, 25 to the side walls 28, 29 respectively in such a way that a rigid interconnection at a predetermined fixed angle between the plane of the platform bottom 27 and the plane defined by the two legs 24, 25 is obtained. As shown in the drawings, the side walls 28, 29 are each formed as a very small lip over most of the length of the side, with an enlarged rear panel for attachment to the associated leg 24 or 25. This allows a large object to be placed across the platform 26 resting on the upper edges of the side walls 28, 29. In an alternative embodiment (not shown) the platform is pivotally mounted to the legs 24, 25, such as by pivot pins, in such a way that it can be folded flat for storage.

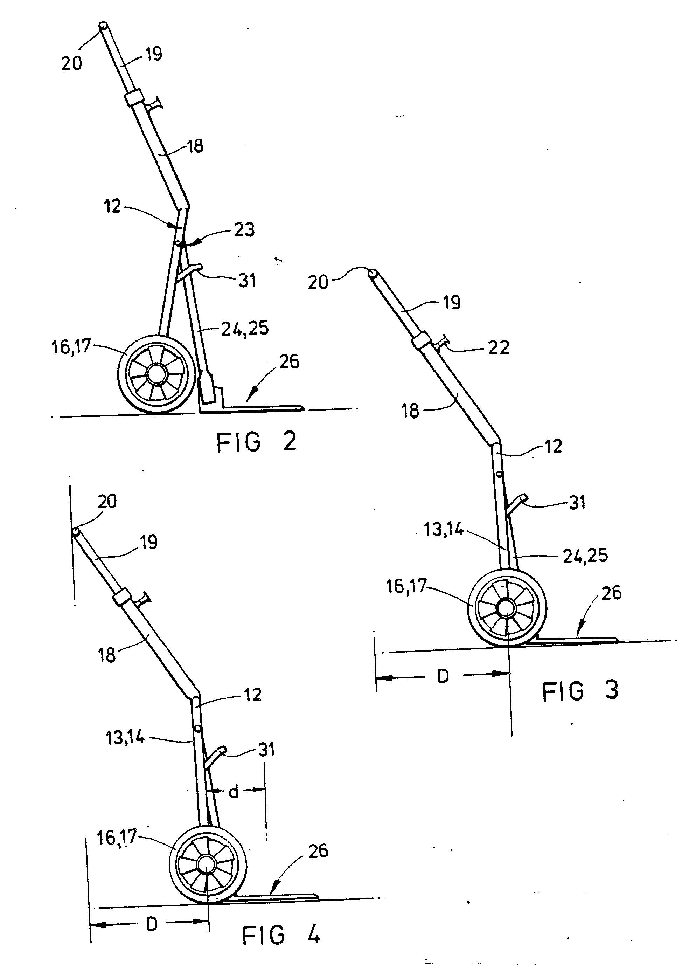

Finally the two arms 13, 14 of the U-shape main frame 12, are spanned by a curved strap 31 which serves as an abutment to limit the pivotal movement of the legs 24, 25 about the cross member 23. Movement of these legs 24, 25 in the opposite direction is limited by abutment of the platform tray or the legs themselves against the axle 15. The effect of the limited articulation of the sub-frame constituted by the legs 24, 25 and the cross member 23 with respect to the U-shape main frame 12 will be described hereinbelow with reference to Figures 2, 3 and 4.

In an alternative embodiment (not illustrated) the legs 21, 25 are replaced by a single leg extending from the cross members 23 to the platform 26.

Referring now to Figure 2, the trolley is shown in a first position with the platform 26 flat on the ground. In this position the main frame 12 has been turned about the cross member 23, in a clockwise direction as viewed in Figure 2, almost to its maximum extent; the arms 13, 14 of the main frame 12 have turned about the pivot constituted by the cross piece 23 until with the wheels 16, 17 still on the ground, the pan 26 now rests flat on the ground. The strap 31 has been brought to a position where it is almost in contact with the legs 24, 25 of the sub-frame; when it has reached the end position on further turning the main frame 12 clockwise it will prevent any further movement of the handle 20, locking the mechanism with the upright column 18 and handle extension 19 at their highest position almost parallel with the legs 24, 25 of the sub-frame.

The position illustrated in Figure 3 is achieved by pulling the handle 20 downwardly and to the left as viewed in Figure 3 without displacing the platform 26 from the ground. This has the effect of turning the main frame 12 about the pivot 23 which is held fixed due to the contact of the platform 26 with the ground and the rigid interconnection of the legs 24, 25 with the platform 26. This movement is continued until the axle 15 is brought into contact with the rear wall 30. Because the distance from the periphery of the wheels to the pivot axis of the cross member 23 is slightly greater than the distance from the pivot 23 to the back of the platform 26 where it joins the legs 24, 25, the back of the platform 26 is raised slightly from the ground as the axle 15 is brought into contact with the rear wall 30. At this point the front edge of the bottom wall 27, of the platform 26 is still in contact with the ground.

Finally, by further turning the handle 20 in an anticlockwise direction as viewed in Figure 4 the whole mechanism is rocked about the wheels 16, 17 with the main frame 12 and sub-frame constituted by the cross member 23 and legs 24, 25 being locked together by engagement of the axle 15 with the back wall 30 of the platform 26 until this latter is horizontal, or more precisely, parallel with the ground.

Because the column 18 is at a substantial angle with the plane defined by the main frame 12, the handle 20 is horizontally displaced, in this third position, by a distance D from the vertical centre line through the wheels 16, 17 which is greater than the distance $d$ of the assumed centre of gravity at the centre of the platform 26 of any load carried thereby. This leverage $D/d$ gives the operator a mechanical advantage in handling the trolley, even with a substantial load on the platform 26.

The distance D is also shown in Figure 3 to illustrate the distance moved by the handle 20 in raising the front edge of the platform 26 to the horizontal position.

As will be seen, the movement of the handle 20 to convert the mechanism from the position illustrated in Figure 4 to that illustrated in Figure 2 is relatively small and easily accomplished so that an operator can lower the load onto the ground and even allow his or her own weight to rest on the handle 20 if desired. Because the platform 26 rests flat on the ground in the position illustrated in Figure 2 it can easily be loaded by sliding the load onto the bottom wall 27 of the platform 26 or by pushing the trolley to introduce the bottom wall 27 under the load. Should it be necessary to maintain the load vertical, for example, if this were a bucket of water or the like, this can readily be achieved by holding the trolley in the position of Figure 4 as it is moved along.

Alternatively, if desired, the handle can be moved further in an anti-clockwise direction in order to tilt the platform 26 so that a part of the load, for example if this were a sack or other heavier load, can be borne by the main frame 12 and balanced by the inclination of this with respect to the vertical.

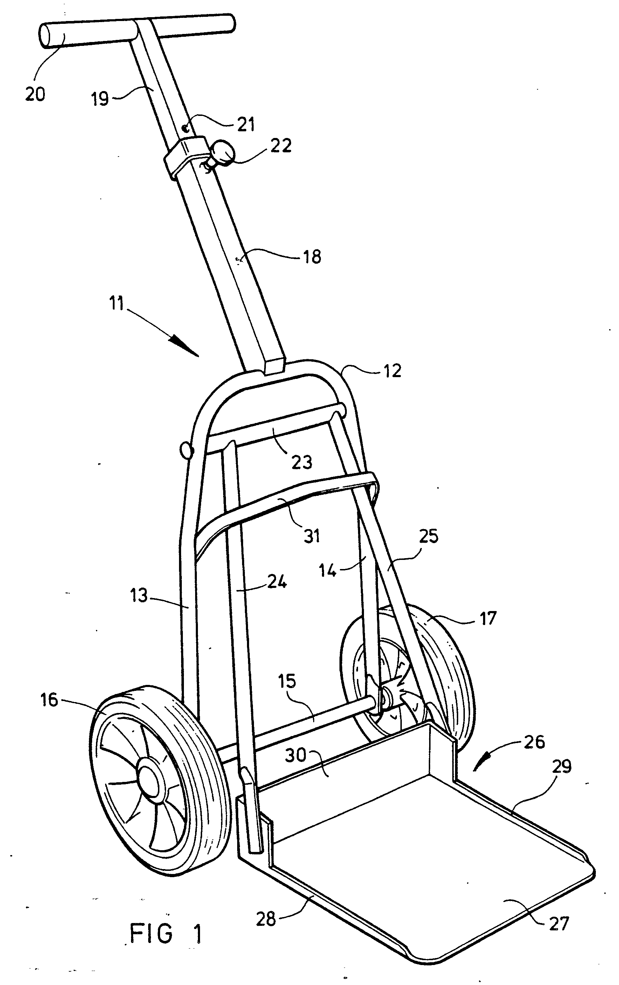

The platform 26 may be pivotally mounted to the support arms 24, 25 in order to allow it to be folded for storage. Suitable abutment means (not shown) would be provided to locate the platform 26 in the working position illustrated in Figure 1, and the pivotal connection would allow it to be turned until the platform 26 is approximately parallel with the legs 24, 25 so that the front to back dimension of the trolley is reduced substantially.

It will be appreciated from Figures 2 and 4 how the present invention may be adapted as an aid to walking for invalids or the infirm. The platform 26 would be replaced by a ground-engaging foot having a suitable ground-engaging area and of a material having a high coefficient of friction on the lower face, and the handle 20 could be replaced with a generally U-shape frame having horizontal arms which would pass to either side of the body of a person standing immediately behind the handle 20 so that support in three directions is available.

Then, by leaning forward or slightly sideways, the user is completely supported with the frame in the position illustrated in Figure 2 and the ground-engaging foot on the end of the legs 24, 25 firmly in contact with the ground and the wheels 16, 17 spaced from the ground. When it is desired to move forward, the handle 20 is rocked backwardly until the wheels 16, 17 roll forward to the position as illustrated in Figure 3, the ground-engaging foot is raised partially so that the frictional resistance is reduced to an extent sufficient to allow it to be moved by sliding over the surface. If the user is sufficiently strong to walk almost unaided, the frame can be moved by depressing the handle 20 until the mechanism is in the position illustrated in Figure 4 where the user can then walk rolling the frame before him until such time as a further period of rest is needed when simply by moving the handle upwards and forwardly the locked ground-engaging position is achieved. There is a possibility that the trolley could roll away from an elderly or infirm user whose reactions are not very fast. To avoid this happening the embodiment formed as a walking frame may be further modified by the provision of secondary or subsidiary legs near the lower ends of the legs 24, 25 which legs project over the axle 15 and are attached to a second ground-engaging foot which contacts the ground on the other side of the line of contact between the wheels 16, 17 and the ground from the ground-engaging foot attached to the legs 24, 25. Thus, in such an embodiment, the wheels 16, 17 will roll only when the handle 20 is located in an intermediate position where the two ground-engaging feet are spaced from the ground and movement in either direction away from this central position will cause the mechanism to become grounded and rigid. Movement can then only take place when the operator is balanced and in control and should any unbalance or lack of control occur then the mechanism will automatically adopt a safety position where it will support the weight of a user resting on the handle.

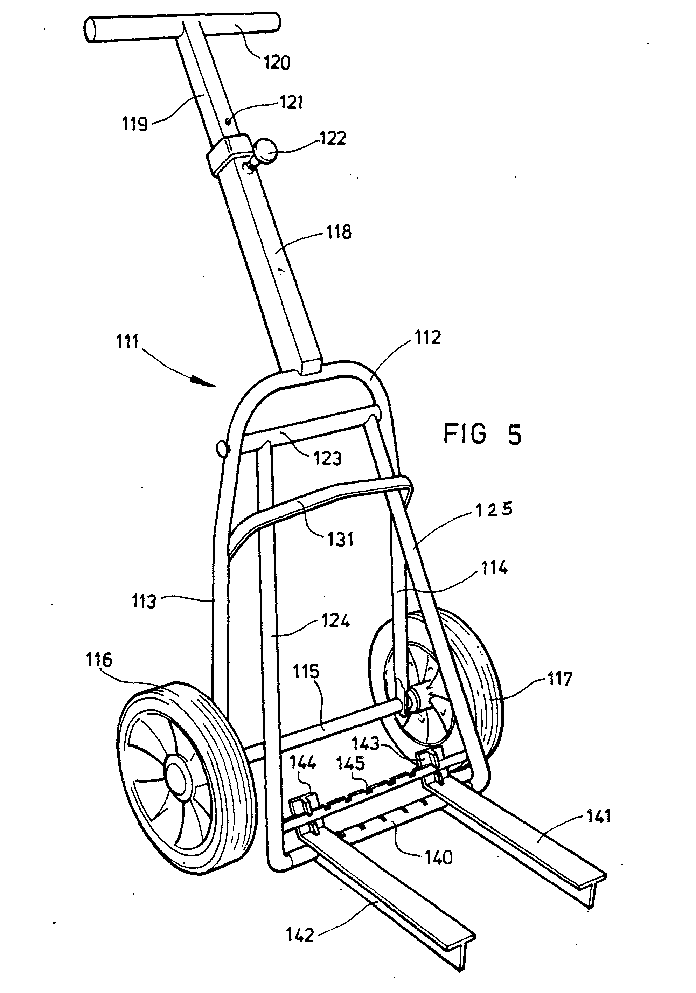

Referring now to Figure 5, the embodiment illustrated has features in common with the embodiments of Figures 1—4 and corresponding or identical parts will be identified with the same reference numerals raised by 100. This embodiment differs from the embodiment previously described in that the legs 124, 125 connected to the cross member 123 are not joined at their bottom end by a platform or tray, but by a lower cross member 140, on which are pivotally mounted two T-section supports 141, 142 having cranked end sections 143, 144 respectively at the pivoted end. A stop bar 145 also spans the legs 124, 125 just above the cross member 140 and limits the pivotal movement of the members 141, 142 by engagement of the cranked end sections 143, 144. The two support members 141, 142 can be used to carry any odd shaped article, or may themselves support a platform or one of a range of different platforms of different sizes specifically adapted for mounting thereon. The particular value of the two linear support members 141, 142, however, is for enabling the trolley to be used to carry a conventional pallet on which any range of goods may be stacked. In use, the trolley 111, operates in the same way as described for the embodiment of Figures 1—4 with the linear support members 141, 142 lowered on the ground and the handle 120 raised, these members can be introduced into the space beneath the load-bearing platform of a pallett. Subsequently, by depressing the handle 120 to cause the trolley to turn about the axis 115, the sub-frame constituted by the legs 124, 125 and the cross member 123 is raised from the ground, elevating the platform supports 141, 142 and enabling a pallett supported thereby to be transported in a substantially horizontal orientation to any convenient location.

It is envisaged that interchangeable special purpose platforms or supports may also be provided for the embodiments of Figures 1—4, for example, to adapt this embodiment for carrying a dustbin which may be too large to fit on the platform 26 illustrated in Figure 1. Such an adaptor may simply interengage on the legs 24, 25 and rest on the platform 26. Likewise, it is envisaged that the platform 26, may be pivotally connected to the legs 24, 25 instead of being fixedly connected as shown, so that the platform bottom 27 may be tipped to a position lying generally parallel to the plane defined by the legs 24, 25.

## Claims

1. A wheeled mechanism for transporting a load, of the type comprising a main frame (12; 112) the members of which define a main frame plane, at least two ground wheels (16, 17; 116, 117) mounted on the main frame (12, 112) so as to be turnable about a common first pivot axis (15, 115) and an operating handle (20; 120) joined to the main frame at an upper end thereof and extending at an angle to the main frame plane on a first side thereof, a secondary rigid frame (24, 25; 124, 125) permanently pivotally attached at or adjacent one end thereof to the main frame (12, 112) to turn about a second pivot axis (23, 123) substantially parallel to the said first pivot axis, a load platform (26; 141, 142) at the end of the secondary frame remote from the said second pivot axis, and first and second limit stops (31, 131; 15, 115) acting to limit the relative pivoting movement of the main and secondary frames in first and second directions respectively to determine respective first and second relative orientations of the main and secondary frames, characterised in that the relative lengths of the secondary frame (24, 25; 124, 125) from the second pivot axis to the load platform and of the main frame from the second pivot axis to the ground-contacting points of the ground wheels (16, 17; 116, 117) are such that in the said first relative orientation of the main and secondary frames, the load platform (26; 141, 142) is engageable on the ground substantially parallel thereto with the wheels of the main frame (12;

112) substantially out of load-bearing contact with the ground so that any downward force applied to the operating handle (20; 120) with a line of action passing on the side of the second axis opposite the first axis maintains the mechanism in the said first relative orientation of the main and secondary frames, and in that the platform can be raised from the ground to a substantially horizontal raised position by relative turning movement of the main frame (12; 112) with respect to the secondary frame (24, 25, 124, 125) about the said second pivot axis to move the mechanism to the said second relative orientation of the said main and secondary frames with the platform experiencing no substantial tipping from the substantially horizontal position in moving from the lowered to the raised positions.

2. A wheeled mechanism according to Claim 1, characterised in that the main frame includes an axle (15, 115) joining the two ground wheels (16, 17; 116, 117) of the main frame, which axle also constitutes the said second limit stop against which the secondary frame (24, 25; 124, 125) engages to determine the said second relative orientation of the main and secondary frames.

3. A wheeled mechanism according to Claim 1, characterised in that the said load platform is formed a tray or pan (26) attached to the secondary frame (24, 25) and projecting therefrom transversely of a plane joining its point of attachment to the main frame (12; 112) with the said pivoted end thereof, the length of the said tray or pan, in the direction of projection thereof, being at least as great as the width thereof.

4. A wheeled mechanism according to Claim 1 or Claim 2, characterised in that the said load platform is turnable between a first position in which it lies generally paralel to the length of the secondary frame (124, 125) and a second position in which it projects transversely of a plane joining its point of attachment to the secondary frame (124, 125) with the said pivoted end thereof.

5. A wheeled mechanism according to any of Claims 1 to 4, further characterised by the provision of a removable pan or tray (26, 27) attachable over the load platform whereby loads having a larger base dimension than the said load platform can be carried thereby.

6. A wheeled mechanism according to Claim 1, characterised in that the load platform on the secondary frame (24, 25; 124, 125) is replaced with a ground-engaging foot, and in that the operating handle (20; 120) is formed as a support frame enabling the mechanism to be used as an aid to walking for the disabled.

7. A wheeled mechanism according to any preceding Claim, characterised in that the first limit stop is formed as an abutment strap between the pivot (23) defining the second pivot axis and the wheels (16, 17) to limit the relative turning movement of the main and secondary frames about the second pivot axis whereby to define the said first relative position of the main and secondary frames.

## Patentansprüche

1. Ein mit Rädern versehenes Gerät zum Transport einer Last, das aus einem Hauptrahmen besteht (12; 112), dessen Schenkel die Hauptrahmenebene definieren, mit zwei Bodenrädern (16, 17; 116, 117), die schwenkbar um eine erste Drehachse (15; 115) am Hauptrahmen befestigt sind (12; 112) und mit einem Bedienungshebel (20; 120), der mit dem Hauptrahmen an dessen oberen Ende verbunden ist und sich im Winkel zur Hauptrahmenebene verlängert, einen starren Sekundärrahmen besitzt (24, 25; 124, 125), der fest schwenkbar am Hauptrahmen (12; 112) montiert ist, wobei ein Ende dessen am Hauptrahmen anliegt und sich um eine zweite Drehachse (23; 123) dreht, die im wesentlichen parallel zu der vorher erwähnten ersten Drehachse liegt, weiterhin eine Ladefläche (26; 141, 142) am Ende des Sekundärrahmens hat, entfernt von der zweiten Drehachse, erste und zweite Endanschläge (31, 131; 15, 115) hat, die die bezogene Drehbewegung des Haupt- und Sekundärgestells begrenzen und zwar in erster bzw. zweiter Richtung und damit bezogene erste bzw. zweite Orientierung des Haupt- und Sekundärrahmens bestimmen, gekennzeichnet darin, daß die bezogene Länge des Sekundärrahmens (24, 25; 124, 125) von der zweiten Drehachse bis zur Ladefläche und des Hauptrahmens von der zweiten Drehachse bis zu den Berührungspunkten der Räder mit dem Boden (16, 17; 116, 117) derartig ist, daß, in der erwähnten ersten relativen Orientierung des Haupt- und Sekundärrahmens, die Ladefläche (26; 141, 132) im wesentlichen parallel zum Boden benutzbar ist, wobei die Räder des Hauptrahmens (12; 112) im wesentlichen keinen lasttragenden Kontakt mit dem Boden machen, daß jegliche, auf den Bedienungshebel, (20; 120) gerichtete Kraft, mit einer Wirkungslinie der Seite der zweiten Achse gegenüber der ersten Achse entlang, das Gerät in der erwähnten ersten relativen Orientierung des Haupt- und Sekundärrahmens hält, und ist gekennzeichnet dadurch, daß die Ladefläche aus einer Bodenstellung in eine im wesentlichen horizontale Hochstellung gebracht werden kann, daß eine relative Drehbewegung des Hauptrahmens (12; 112), in bezug auf den Sekundärrahmen, um die erwähnte zweite Drehachse das Gestell in die erwähnte zweite bezogene Orientierung des Haupt- und Sekundärrahmens verschiebt, wobei die Ladefläche ohne beträchtliches Kippen, aus der im wesentlichen horizontalen Position durch Verschiebung aus der Bodenstellung in eine Hochstellung gebracht wird.

2. Ein mit Rädern versehenes Gerät gemäß Anspruch 1, das dadurch gekennzeichnet ist, daß der Hauptrahmen eine Achse besitzt (15; 115), die die zwei Bodenräder (16, 17; 116, 117) des Hauptrahmens verbindet, die den erwähnten zweiten Endanschlag bildet, gegen den der Sekundärrahmen (24, 25; 124, 125) stößt und somit die erwähnte zweite bezogens Orientierung des Haupt- und Sekundärrahmens bestimmt.

3. Ein mit Rädern versehenes Gerät gemäß Anspruch 1, dadurch gekennzeichnet ist, daß die Ladefläche wie eine Schale oder Pfanne (26) gebildet ist, an den Sekundärrahmen montiert ist (24, 25) undvon dort aus einer Ebene quer hervorragt, die ihre Befestigungspunkte am Hauptrahmen mit dem drehbaren Endstück gehat, daß die Länge dieser hervorragenden Schale oder Pfanne in Richtung Überhang mindestens so groß ist wie deren Breite.

4. Ein mit Rädern versehenes Gerät gemäß Anspruch 1 oder Anspruch 2, das dadurch gekennzeichnet ist, daß die erwähnte Ladefläche zwischen der ersten Position, in der sie im allgemeinen parallel zur Länge des Sekundärrahmens (124, 125) liegt und einer zweiten Position, in der sie quer aus einer Ebene hervorragt, deren Befestigungspunkte mit dem Hauptrahmen (124, 125) von dem drehbaren Endstück gebildet werden, drehbar ist.

5. Ein mit Rädern versehenes Gerät gemäß den Ansprüchen 1 und 4, das weiterhin dadurch gekennzeichnet ist, daß es mit einer abnenmbaren Pfanne oder Schale versehen ist (26, 27), die auf die Lastfläche befestigt wird und somit den Transport von Lasten ermöglicht, deren Bodendimensionen größer sind als die der erwähnten Ladefläche.

6. Ein mit Rädern versehenes Gerät gemäß Anspruch 1, das dadurch gekennzeichnet ist, daß die Ladefläche am Sekundärrahmen (24, 25; 124, 125) durch einen Boden-Schaltfuß ersetzt wird, und der Bedienungshebel (20; 120) als Stützrahmen geformt ist, der es ermöglicht ihn als Gehilfe für Behinderte zu benützen.

7. Ein mit Rädern versehenes Gerät gemäß allen vorangegangenen Ansprüchen, das dadurch gekennzeichnet ist, daß der erste Endanschlag ein Stoßband zwischen dem Drehpunkt (23) und den Rädern (16, 17) bildet, damit die zweite Drehachse bestimmt und die relative Drehung des Haupt- und Sekundärrahmens um die zweite Drehachse begrenzt, und dabei die erwähnte relative Position des Haupt- und Sekundärrahmens definiert.

## Revendications

1. Un dispositif muni de roues pour transporter un fardeau du genre comprenant un châssis principal (12; 112) dont les éléments définissent un plan du châssis principal, au moins deux roues (16, 17; 116, 117) montées sur le châssis principal (12, 112) pour être capable d'être tournées autour d'un premier axe commun, (15, 115), et une poignée de manoeuvre (20; 120) rapportée au châssis principal à son bout supérieur et saillant à un angle au plan du châssis principal sur son premier côté, un châssis fixe secondaire (24, 25; 124, 125) attaché à pivot d'une façon permanente sur ou contigu à son bout au châssis principal (12, 112) pour tourner autour d'un deuxième axe (23, 123) parallèle en grande partie audit premier axe, une plate-forme de chargement (26; 141, 142) au bout du châssis secondaire loin dudit second axe, et première et deuxième butées (31, 131; 15, 115) qui agissent à limiter le pivotement relatif des châssis principaux et secondaires dans une première et dans une deuxième direction respectivement pour déterminer respectivement la première et la deuxième orientation relative des châssis principaux et secondaires, caractérisé par le fait que les longueurs relatives du châssis secondaire (24, 25; 124, 125) du deuxième axe à la plate-forme de chargement et du châssis principal du deuxième axe aux points de contact avec le sol des roues (16, 17; 116, 117) sont telles que dans ladite première orientation relative du principal et du secondaire châssis, la plate-forme de chargement (26; 141, 142) peut toucher le sol et y est parallèle en grande partie, les roues du châssis principal (12; 112) étant en grande partie hors de contact porteur avec le sol, de sorte que toute force de haut en bas exercée sur la poignée de manoeuvre (20; 120) avec une direction de force qui passe au côté du deuxième axe qui est en face du premier axe maintient le dispositif dans ladite première orientation relative du châssis principal et du châssis secondaire, et par le fait que la plate-forme peut être soulevée du sol dans une position elevée et horizontal en grande partie par le tournage relatif du châssis principal (12; 112) relatif au châssis secondaire (24, 25; 124, 125) autour dudit deuxième axe afin de déplacer le dispositif à ladite deuxième orientation relative dudit châssis principal et dudit châssis secondaire de sorte que la plate-forme n'éprouve aucune inclinaison importante de la position en grande partie horizontale pendant le déplacement de la position baissée à la position elevée.

2. Un dispositif muni de roues selon la revendication 1, caractérisé par le fait que le châssis principal comprend un essieu (15, 115) rapportant les deux roues (16, 17; 116, 117) du châssis principal, cet essieu constituant aussi ladite deuxième butée contre laquelle bute le châssis secondaire (24, 25; 124, 125) pour déterminer ladite deuxième orientation relative du châssis principal et du châssis secondaire.

3. Un dispositif muni de roues selon la revendication 1, caractérisé par le fait que ladite plate-forme de chargement est construite comme un plateau ou comme un bassin (26) rapporté au châssis secondaire (24, 25) et qui en saillit d'une façon transversale d'un plan qui en joint son point de fixation au châssis principal (12; 112) avec son dit bout pivoté, le long dudit plateau ou dudit bassin, dans sa direction de projection, étant au moins aussi grand que sa largeur.

4. Un dispositif muni de roues selon la revendication 1 ou la revendication 2, caractérisé par le fait que ladite plate-forme de chargement peut être tournée entre une première position dans laquelle elle est en général parallèle à la longueur du châssis secondaire (124, 125) et une deuxieme position dans laquelle elle saillit d'une façon transversale d'un plan qui réunit son point de fixation au châssis secondaire (124, 125) avec son dit bout pivoté.

5. Un dispositif muni de roues selon l'une quelconque des revendications 1 à 4, caractérisé encore par la fourniture d'un plateau ou d'un bassin détachable (26, 27) capable d'être attaché sur la plate-forme de chargement de sorte que les fardeaux ayant une dimension de base plus grande que celle de ladite plate-forme de chargement peuvent être ainsi portés.

6. Un dispositif muni de roues selon la revendication 1, caractérisé par le fait que la plate-forme de chargement sur le châssis secondaire (24, 25; 124, 125) est remplacée par un pied destiné a toucher le sol et par le fait que la poignée de manoeuvre (20; 120) est façonnée comme un châssis de soutien qui permet au dispositif d'être utilisé pour aider les infirmes dans la marche à pied.

7. Un dispositif muni de roues selon l'une quelconque des revendications précédentes, caractérisé par le fait que la prèmiere butée est façonnée comme une bande pour limiter le movement entre le pivot (23) qui délimite le deuxième axe et les roues (16, 17) pour limiter le déplacement anguleux relatif du châssis principal et du châssis secondaire autour du deuxième axe afin de délimiter ladite première position relative du châssis principal et du châssis secondaire.

EP 0 138 571 B1

FIG 1

FIG 2

FIG 3

FIG 4

2

FIG 5